# EUROPÄISCHE PATENTSCHRIFT

(11) **EP 2 183 902 B1**
(45) Veröffentlichungstag und Bekanntmachung des Hinweises auf die Patenterteilung: **05.01.2011**
(21) Anmeldenummer: 07802247.2
(22) Anmeldetag: 04.09.2007
(51) Int. Cl.: H04L 29/06

(54) **Verfahren zum Erkennen eines Dienstverhinderungsangriffs und Kommunikationsendgerät**
Method for detecting a Denial of Service attack and a communication terminal
Procédé pour détecter une attaque de déni de service et terminal de communication

(43) Veröffentlichungstag der Anmeldung: 12.05.2010
(73) Patentinhaber: Siemens Aktiengesellschaft, 80333 München (DE)
(72) Erfinder: BECKER, Manfred, 90475 Nürnberg (DE); DOEBRICH, Udo, 76307 Karlsbad (DE); HEIDEL, Roland, 76870 Kandel (DE)
(86) Internationale Anmeldenummer: PCT/EP2007/007875
(87) Internationale Veröffentlichungsnummer: WO 2009/030262

(56) Entgegenhaltungen:
- YING ZHANG ET AL: "Low-Rate TCP-Targeted DoS Attacks Disrupts Internet Routing" PROCEEDINGS OF 14TH ANNUAL NETWORK & DISTRIBUTED SYSTEM SECURITY SYMPOSIUM (NDSS), 28. Februar 2007 (2007-02-28), - 2. März 2007 (2007-03-02) XP007905127
- DONOVAN S ET AL: "Session Timers in the Session Initiation Protocol (SIP), RFC4028" INTERNET ENGINEERING TASK FORCE (IETF), April 2005 (2005-04), XP015041971
- TIAN BU ET AL: "A survivable DoS-resistant overlay network" COMPUTER NETWORKS, ELSEVIER SCIENCE PUBLISHERS, Bd. 50, Nr. 9, 20. Juni 2006 (2006-06-20), Seiten 1281-1301, XP005403021 ISSN: 1389-1286
- FUCHSBERGER ET AL: "Intrusion Detection Systems and Intrusion Prevention Systems" INFORMATION SECURITY TECHNICAL REPORT, ELSEVIER SCIENCE PUBLISHERS, Bd. 10, Nr. 3, 1. Januar 2005 (2005-01-01), Seiten 134-139, XP005134957 ISSN: 1363-4127

## Beschreibung

Die Erfindung betrifft ein Verfahren zur Erkennung eines Dienstverhinderungsangriffs auf ein erstes Kommunikationsendgerät und ein erstes Kommunikationsendgerät.

In Kommunikationsnetzwerken kommunizieren verschiedene Kommunikationsteilnehmer miteinander. Diese Kommunikationsnetzwerke können drahtgebunden (Bussysteme) oder auch drahtlos sein (z.B. Wireless LAN). Die Kommunikationsnetzwerke können entweder geräteintern (Bussystem in SPS, Automobil, Maschine etc.), firmenintern (Intranet, Fabrik), firmenübergreifend oder weltumspannend (Internet) aufgebaut sein.

Gegen Schädigungen des internen Kommunikationsnetzwerkes von extern z.B. über das Internet kann man sich mit bestimmten Einrichtungen wie Filtern, Firewalls, Virenscannern oder gar der kompletten Trennung der Kommunikationsverbindung nach extern etc. schützen.

Dienstverhinderungsangriffe, in der englischsprachigen Literatur auch Denial of Service Attacks bekannt, werden gewollt in Schädigungsabsicht in einem Kommunikationsnetzwerk ausgeführt und dabei wird ein Kommunikationsendgerät des Kommunikationsnetzwerks gezielt mit einer Vielzahl von Meldungen überhäuft, die das Kommunikationsendgerät in der zur Verfügung stehenden Zeit bei gegebenem strukturellem Aufbau des Kommunikationsendgerätes nicht bewältigen kann. Dabei kommt das Kommunikationsendgerät bei einem Dienstverhinderungsangriff nicht mit der Verarbeitung der Vielzahl von eintreffenden Meldungen nach und muss diese in einem Zwischenspeicher, dessen Umfang jedoch beschränkt ist, zwischenspeichern. Der Zwischenspeicher läuft jedoch sehr schnell voll und der Zwischenspeicher nimmt dann keine weiteren Meldungen mehr an. Die bereits im Zwischenspeicher enthaltenen Meldungen werden verfälscht oder überschrieben. Insgesamt führt der Dienstverhinderungsangriffsangriff dazu, das die betroffenen Kommunikationsendgeräte ausfallen und dann auch das übergeordnete Kommunikationsnetzwerk zusammenbricht, was wiederum zu Fehlfunktionen oder Störungen in Anlagen führt, die vom Kommunikationsnetzwerk gesteuert werden.

Es ist daher die Aufgabe der vorliegenden Erfindung eine technische Lösung zur frühzeitigen und zuverlässigen Erkennung eines Dienstverhinderungsangriffs auf ein erstes Kommunikationsendgerät zu entwickeln und so auf diese Weise die Sicherheit der Kommunikation im Kommunikationsnetzwerk zu erhöhen.

Die Aufgabe wird erfindungsgemäß durch ein Verfahren zum Erkennen eines Dienstverhinderungsangriffs auf ein erstes Kommunikationsendgerät durch das erste Kommunikationsendgerät gelöst, wobei
a) das erste und mindestens ein zweites Kommunikationsendgerät Kommunikationsteilnehmer in einem Kommunikationsnetzwerk sind, und zwischen dem ersten und dem zweiten Kommunikationsendgerät eine Kommunikationsverbindung aufgebaut ist,
b) wobei das erste Kommunikationsendgerät zu einer festgelegten Zeit eine Statusabfragemeldung des zweiten Kommunikationsendgerätes empfangen soll,
c) wobei der rechtzeitige Empfang der Statusabfragemeldung des zweiten Kommunikationsendgerätes mittels eines dem ersten Kommunikationsendgerät zugeordneten Zeitgebers überwacht wird,
d) wobei das erste Kommunikationsendgerät nach dem Ausbleiben des rechtzeitigen Empfangs der Statusabfragemeldung des zweiten Kommunikationsendgerätes, wenn es dennoch mindestens eine weitere Meldung empfängt, deren Meldungsinhalt als Absender das zweite Kommunikationsendgerät angibt, den Empfang dieser mindestens einen weiteren Meldung als ein Dienstverhinderungsangriff auf das erste Kommunikationsendgerät interpretiert und eine Aktion ausführt.

Die Aufgabe wird erfindungsgemäß des weiteren durch ein erstes Kommunikationsendgerät zur Durchführung der im ersten Kommunikationsendgerät ablaufenden Verfahrensschritte des Verfahrens gemäß einem der Patentansprüche 1 bis 11 gelöst.

Das erfindungsgemäße Verfahren und das erfindungsgemäße erste Kommunikationsendgerät bewirken die frühzeitige und zuverlässige Erkennung eines Dienstverhinderungsangriffs auf das erste Kommunikationsendgerät und erhöhen auf diese Weise die Sicherheit der Kommunikation im Kommunikationsnetzwerk.

Weiterbildungen der Erfindung ergeben sich aus den Unteransprüchen.

In vorteilhafter Weise wird das Verfahren derart weitergebildet, dass die ausgeführte Aktion des ersten Kommunikationsendgerätes, die Entfernung der in einem Speicher des ersten Kommunikationsendgerätes zwischengespeicherten mindestens einen weiteren Meldung aus dem Speicher bewirkt. Dadurch kann selektiv nur die weitere Meldung, die ja durch den Dienstverhinderungsangriff erzeugt wurde, gelöscht werden, ohne dass bereits vor dem Vorliegen des Dienstverhinderungsangriffs in den Speicher eingespeicherte Meldungen gelöscht werden.

In weiterhin vorteilhafter Weise wird die im vorstehenden Absatz genannte Lösung weiterentwickelt und der Inhalt des Speichers komplett gelöscht. Dadurch kann ein Meldungsüberlauf im Speicher durch den Dienstverhinderungsangriff in technisch einfacher Realisierung vermieden werden, wobei allerdings auch in den Speicher eingespeicherte Meldungen mit gelöscht werden, die nicht auf dem Dienstverhinderungsangriff beruhen.

In weiterhin vorteilhafter Weise wird die in den vorstehenden Absätzen genannte Lösung dadurch weitergebildet, dass nur die mindestens eine weitere Meldung aus dem Speicher gelöscht wird, die innerhalb einer vorbestimmten Zeit in Bezug zum Ausbleiben des rechtzeitigen Empfangs der Statusabfragemeldung des zweiten Kommunikationsendgerätes in den Speicher eingespeichert wurde oder wird. Dieses stellt wiederum eine Kompromisslösung dar, möglichst nur die auf dem Dienstverhinderungsangriff beruhenden in den Speicher eingespeicherten weiteren Meldungen zu löschen und nicht Meldungen, die nicht auf dem Dienstverhinderungsangriff beruhen.

In weiterhin vorteilhafter Weise wird das Verfahren dadurch weitergebildet, dass die ausgeführte Aktion des ersten Kommunikationsendgerätes, die Ausgabe einer Warnmeldung, dass ein Dienstverhinderungsangriff auf das erste Kommunikationsendgerät vorliegt, an andere Kommunikationsteilnehmer des Kommunikationsnetzwerks und / oder an eine Kommunikationsnetzwerksüberwachungseinrichtung ist. Dadurch können andere Kommunikationsteilnehmer in einen Sicherheitsmodus übergehen und so Schädigungen durch den Dienstverweigerungszugriff vermeiden. Andererseits kann die Suche nach dem Verursacher des Dienstverhinderungsangriffs umgehend erfolgen, um so die normale Kommunikation zwischen den Kommunikationsteilnehmern schnell wieder zu verwirklichen.

In weiterhin vorteilhafter Weise wird das Verfahren dadurch weitergebildet, dass das erste Kommunikationsendgerät zu festgelegten Zeiten wiederholt Statusabfragemeldungen des zweiten Kommunikationsendgerätes empfangen soll und wobei das erste Kommunikationsendgerät nach dem Ausbleiben des rechtzeitigen Empfangs einer vorbestimmten Zahl von Statusabfragemeldungen des zweiten Kommunikationsendgerätes, wenn es dennoch mindestens eine weitere Meldung empfängt, deren Meldungsinhalt als Absender das zweite Kommunikationsendgerät angibt, den Empfang dieser mindestens einen weiteren Meldung als ein Dienstverhinderungsangriff auf das erste Kommunikationsendgerät interpretiert und eine Aktion ausführt. Dadurch wird vermieden, dass die Aktion bereits eingeleitet wird, wenn aufgrund beliebiger Kommunikationsfehler eine Statusabfragemeldung des zweiten Kommunikationsendgerätes nicht beim ersten Kommunikationsendgerät eintrifft.

In weiterhin vorteilhafter Weise wird das Verfahren derart weitergebildet, dass das erste Kommunikationsendgerät erst nach einer vorbestimmten Zahl von empfangenen weiteren Meldungen, deren Meldungsinhalt als Absender das zweite Kommunikationsendgerät angibt, die Aktion ausführt. Dadurch dass Dienstverhinderungsangriffe in der Praxis eine große Vielzahl von weiteren Meldungen umfassen, kann dann mit größerer Sicherheit ein Dienstverhinderungsangriff von einem normalen Meldungsverkehr unterschieden werden.

In einer weiteren vorteilhaften Ausbildung des Verfahrens gemäß einem der beiden vorstehenden Absätze wird dass Verfahren in Bezug auf Statusabfragemeldungen angewendet, die zyklisch oder periodisch vom ersten Kommunikationsendgerät empfangen werden sollen. Dadurch kann eine klare Zuordnung zwischen einem Dienstverhinderungsangriff und dem Ausbleiben des Empfangs von definierten Statusabfragemeldungen vollzogen werden.

In einer Weiterbildung des Verfahrens gemäß dem vorstehenden Absatz sind die Statusabfragemeldungen Lebenszyklusmeldungen oder Kommunikationsteilnehmerüberprüfungsrückmeldungen. Diese in Kommunikationsnetzwerken weit verbreiteten Meldungen sind in besonderem Maße für das Verfahren geeignet.

In einer Weiterbildung des Verfahrens ist das Verfahren auch dann in vorteilhafter Weise anwendbar, wenn die mindestens eine weitere Meldung eine Statusabfragemeldung ist. Damit wird eine mögliche Lücke in der Erkennung von Dienstverhinderungsangriffen geschlossen.

In einer Weiterbildung des Verfahrens ist dass Verfahren auch dann in vorteilhafter Weise anwendbar, wenn nur das erste und das zweite Kommunikationsendgerät Kommunikationsteilnehmer in dem Kommunikationsnetzwerk sind. Dadurch wird der Anwendungsbereich des Verfahrens auch auf ein Kommunikationsnetzwerk erweitert, welches nur aus zwei Kommunikationsteilnehmern besteht.

Weitere Vorteile der Erfindung ergeben sich aus der folgenden Beschreibung, welche in Verbindung mit den beigefügten Zeichnungen die Erfindung anhand von vier Ausführungsbeispielen erläutert.

Dabei zeigt in schematischer Darstellung die
FIG 1 ein firmeninternes Kommunikationsnetzwerk mit einem ersten Kommunikationsendgerät, einem zweiten Kommunikationsendgerät und drei weiteren Kommunikationsendgeräten, die jeweils an einen Bus angeschlossen sind, und die
FIG 2 den strukturellen Aufbau des ersten Kommunikationsendgerätes, und die
FIG 3 die zeitliche Abfolge des Eintreffens bzw. Ausbleibens von Statusabfragemeldungen im ersten Kommunikationsendgerät, die vom zweiten Kommunikationsendgerät ausgesendet werden, und die
FIG 4 die zeitliche Abfolge des Eintreffens bzw. Ausbleibens von Statusabfragemeldungen im ersten Kommunikationsendgerät und die zeitliche Abfolge des Eintreffens von weiteren Meldungen im ersten Kommunikationsendgerät.

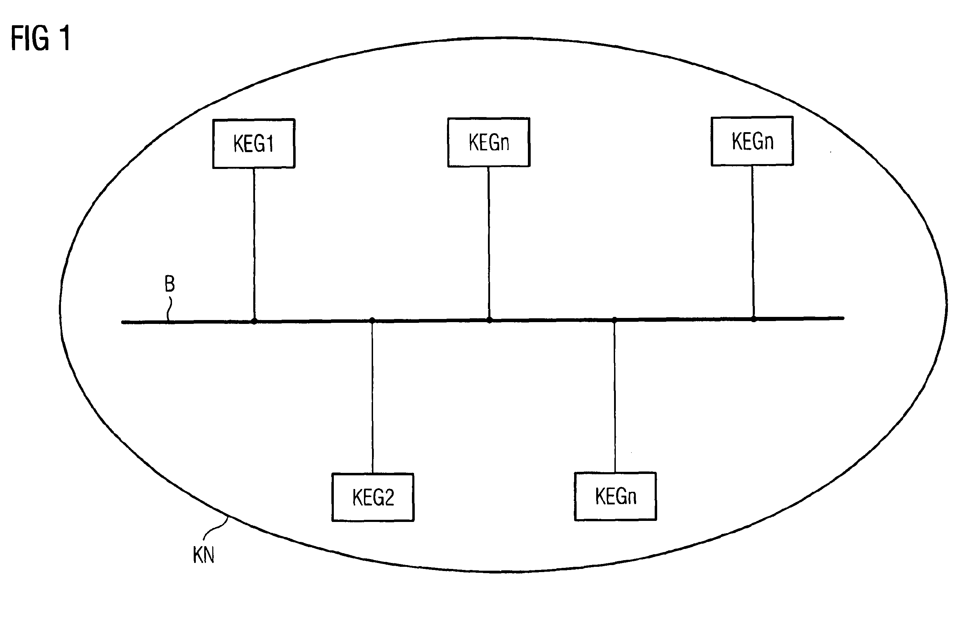

Die Figur 1 zeigt ein firmeninternes Kommunikationsnetzwerk KN, dessen Grenze durch die ovale Begrenzungslinie veranschaulicht werden soll. Das Kommunikationsnetzwerk KN umfasst ein erstes Kommunikationsendgerät KEG1, ein zweites Kommunikationsendgerät KEG2 und drei weitere Kommunikationsendgeräte KEGn, die jeweils an einen Bus B angeschlossen sind. Weitere Schnittstellen zu firmeninternen oder firmenexternen Kommunikationspartnern sind möglich, jedoch hier nicht gezeigt. Die Erfindung ist nicht auf firmeninterne Kommunikationsnetzwerke KN beschränkt, allerdings bestehen, wie in den Kapiteln zum Stand der Technik bereits erwähnt, auch andere Sicherungsmöglichkeiten gegen Dienstverhinderungsangriffe von externen Kommunikationsteilnehmern.

Die Kommunikationsendgeräte KEG1, KEG2, KEGn können über den Bus B miteinander Meldungen austauschen. Um eine Kommunikationsverbindung aufzubauen und danach Meldungen auszutauschen, werden festgelegte Kommunikationsprotokolle verwendet. Diese Kommunikationsprotokolle beschreiben den Aufbau der auszutauschenden Datenpakete und enthalten typischerweise Angaben zu Absender und Empfänger des Datenpaketes, dem Typ des Datenpaketes (Signalisierungsdaten z.B. Verbindungsaufbaupaket, Verbindungsabbaupaket, Statusabfragemeldung oder auch Nutzdaten), der Paketlänge und eine Prüfsumme. Die Protokolle werden in Schichten organisiert (OSI-Schichtenmodell), wobei die Protokolle höherer Schichten Dienste von Protokollen niedriger Schichten verwenden. Das Internetprotokoll TCP/IP hat einen ähnlichen Aufbau, der dem Fachmann geläufig ist, und daher keiner weiteren Erläuterung bedarf.

Zwischen dem ersten und dem zweiten Kommunikationsendgerät KEG1, KEG2 wurde infolge des Austausches von Verbindungsaufbaupaketen eine Kommunikationsverbindung hergestellt, und es können jetzt weitere Meldungen ausgetauscht werden. Des Weiteren werden Statusabfragemeldungen zwischen den beiden Kommunikationsendgeräten KEG1, KEG2 ausgetauscht, was später noch im Detail erläutert wird.

Ein Dienstverhinderungsangriff könnte jetzt vom zweiten Kommunikationsendgerät KEG2 als Angreifer auf das erste Kommunikationsendgerät KEG1 erfolgen, wobei das erste Kommunikationsendgerät KEG1 dann mit weiteren Meldungen überschüttet werden würde. Von der Erfindung umfasst sein soll auch dieser Fall, dass der Dienstverhinderungsangriff von dem zweiten Kommunikationsendgerät KEG2 initiiert wird. Für diesen Fall sind die weiteren Kommunikationsteilnehmer KEGn nicht erforderlich (hier nicht gezeigt); das Kommunikationsnetzwerk kann hier nur das erste und das zweite Kommunikationsendgerät KEG1, KEG2 umfassen. In diesem Fall kann die Schädigungsabsicht vom ersten Kommunikationsendgerät KEG1 jedoch schnell erkannt werden, da das erste und das zweite Kommunikationsendgerät KEG1, KEG2 in der Regel auf die Übertragung und Bearbeitung einer bestimmten Informationsmenge ausgelegt sind und keine weiteren Kommunikationsendgeräte KEGn an das Kommunikationsnetzwerk KN angeschlossen sind (hier nicht gezeigt). Bei Überhäufung des ersten Kommunikationsendgerätes KEG1 durch eine Vielzahl von Meldungen des zweiten Kommunikationsendgerätes KEG2 und Erkennung der Schädigungsabsicht des zweiten Kommunikationsendgerätes KEG2 durch das erste Kommunikationsendgerät KEG1 wird daher schnell eine Gegenmaßnahme wie ein Verbindungsabbau durch das erste Kommunikationsendgerät KEG1 eingeleitet werden.

In der Regel wird der Dienstverhinderungsangriff jedoch von einem weiteren Kommunikationsendgerät KEGn initiiert. Ist die Verbindung zwischen dem ersten und dem zweiten Kommunikationsendgerät KEG1, KEG2 aufgebaut, werden die Vielzahl von weiteren Meldungen, d.h. der Dienstverhinderungsangriff von einem der weiteren Kommunikationsendgeräte KEGn erzeugt, wobei allerdings im Adressfeld der jeweiligen weiteren Meldungen (Datenpakete) die Absenderinformation des weiteren Kommunikationsendgerätes KEGn gegen die des zweiten Kommunikationsendgerätes KEG2 ausgetauscht wird. Für den Empfänger der Datenpakete erscheint es so, als ob der Dienstverhinderungsangriff vom zweiten Kommunikationsendgerät KEG2 hervorgerufen wird. Die Quelle des Dienstverhinderungsangriffs, hier das weitere Kommunikationsendgerät KEGn, kann jedoch nicht auf einfache Weise erkannt werden.

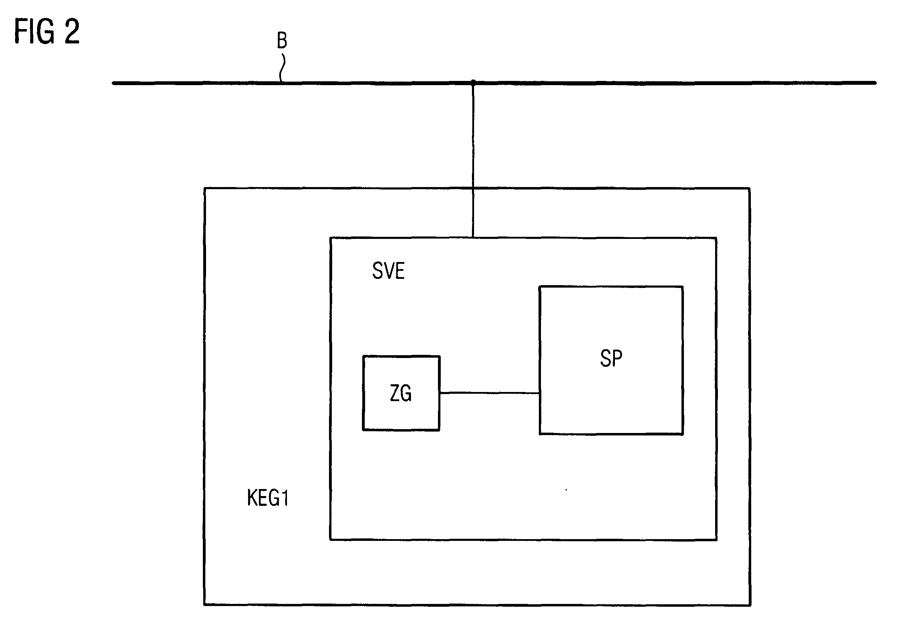

Die Figur 2 zeigt den strukturellen Aufbau des ersten Kommunikationsendgerätes KEG1, das wie in Figur 1 bereits erläutert an den Bus B angeschlossen ist, und über diesen Datenpakete mit anderen Kommunikationsteilnehmern KEG2, KEGn des Kommunikationsnetzwerks KN (hier nicht gezeigt) austauschen kann. Das erste Kommunikationsendgerät KEG1 umfasst eine Steuerungs- und Verarbeitungseinheit SVE und die Steuerungs- und Verarbeitungseinheit SVE umfasst einen Zeitgeber ZG und einen mit dem Zeitgeber ZG verbundenen Speicher SP. Der Zeitgeber ZG könnte selbstverständlich auch außerhalb des ersten Kommunikationsendgerätes KEG1 angeordnet sein, muss dann jedoch über eine Datenverbindung mit der Steuerungs- und Verarbeitungseinheit SVE verbunden sein (hier nicht gezeigt). Die Steuerungs- und Verarbeitungseinheit SVE ist an den Bus B angeschlossen. Das zweite Kommunikationsendgerät KEG2 und die weiteren Kommunikationsendgeräte KEGn haben den gleichen Aufbau (hier nicht gezeigt).

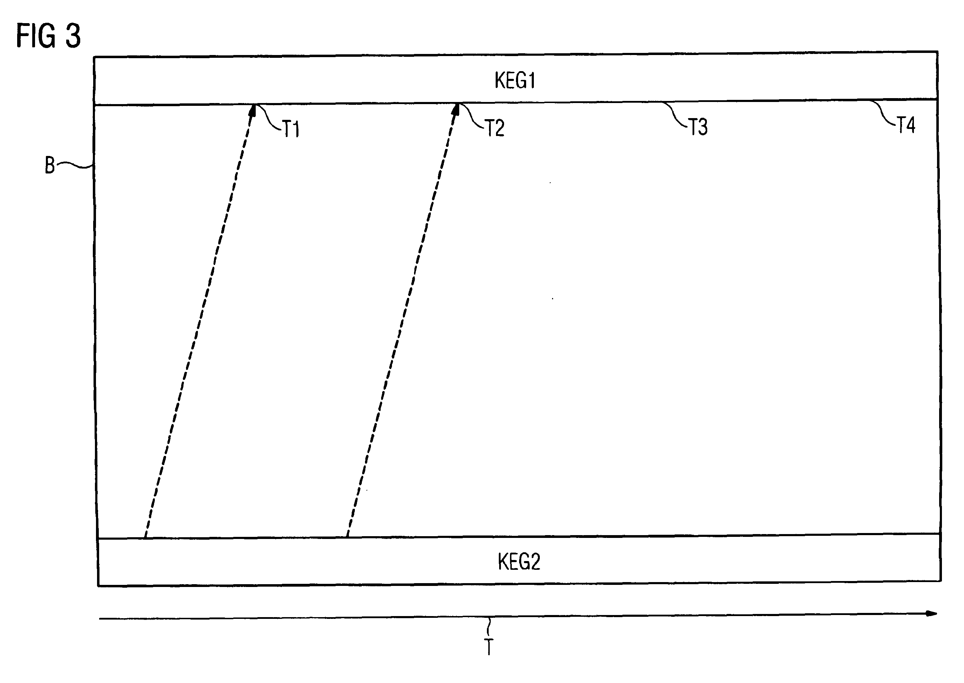

Die Figur 3 zeigt die zeitliche Abfolge des Eintreffens von Statusabfragemeldungen im ersten Kommunikationsendgerät KEG1, die vom zweiten Kommunikationsendgerät KEG2 über den Bus B ausgesendet werden. Die Zeitachse T ist X-Achse. Ist zwischen dem ersten und zweiten Kommunikationsendgerät KEG1, KEG2, wie oben beschrieben, eine Kommunikationsverbindung aufgebaut worden, können Meldungen zwischen dem ersten und zweiten Kommunikationsendgerät KEG1, KEG2 ausgetauscht werden. Diese Meldungen umfassen auch Signalisierungsmeldungen. Eine dieser Signalisierungsmeldungen wird im Weiteren als Statusabfragemeldung bezeichnet. Die Statusabfragemeldungen werden von dem zweiten Kommunikationsendgerät KEG2 selbständig erzeugt, d.h. auf ihre Erzeugung kann nicht mittels Bedienoberfläche des zweiten Kommunikationsendgerätes KEG2 eingegriffen werden. Die Statusabfragemeldung ist in Bezug auf den Aufbau der Meldung unterschiedlich zu der weiteren Meldung und kann daher vom ersten Kommunikationsendgerät KEG1 über den unterschiedlichen Aufbau der Meldung unterschieden werden. Diese vom zweiten Kommunikationsendgerät KEG2 wiederholt ausgesendeten Statusabfragemeldungen treffen in der Regel (auch wiederholt) im ersten Kommunikationsendgerät KEG1 ein. Von der Erfindung soll allerdings auch umfasst sein, dass nach einer aufgebauten Kommunikationsverbindung zwischen dem ersten und zweiten Kommunikationsendgerät KEG1 und KEG2 nur eine einzige Statusabfragemeldung vom zweiten Kommunikationsendgerät KEG2 ausgesendet wird (hier nicht gezeigt).

Wichtig an diesen Statusabfragemeldungen ist, dass das erste Kommunikationsendgerät KEG1 aufgrund des vereinbarten Netzwerkprotokolls weiß, wann eine Statusabfragemeldung des zweiten Kommunikationsendgerätes KEG2 im ersten Kommunikationsendgerät KEG1 eintreffen soll. In der Figur 3 wird das durch die Zeitpunkte T1 bis T4 dargestellt. Die Überwachung des zeitlichen Eintreffens der Statusabfragemeldung erfolgt mittels des Zeitgebers ZG im ersten Kommunikationsendgerät KEG1. Wenn wiederholt Statusabfragemeldungen vom zweiten Kommunikationsendgerät KEG2 versendet werden, geschieht dieses in der Regel zyklisch oder periodisch. Diese Statusabfragemeldungen sollten dann auch zyklisch oder periodisch zu einer dem ersten Kommunikationsendgerät KEG1 vorbekannten Zeit im ersten Kommunikationsendgerät KEG1 eintreffen. Die Figur 3 zeigt, dass die erste Statusabfragemeldung (linker gestrichelter Pfeil) des zweiten Kommunikationsendgerätes KEG2 zum vorbestimmten Zeitpunkt T1, also rechtzeitig eintrifft. Die zweite Statusabfragemeldung (rechter gestrichelter Pfeil) des zweiten Kommunikationsendgerätes KEG2 trifft ebenfalls rechtzeitig zum Zeitpunkt T2 im ersten Kommunikationsendgerät KEG1 ein. Zu den Zeitpunkten T3 und T4 sollte eine dritte bzw. vierte Statusabfragemeldung des zweiten Kommunikationsendgerätes KEG2 im ersten Kommunikationsendgerät KEG1 eintreffen, was hier jedoch nicht der Fall ist (keine gestrichelten Pfeile in der Figur 3 bei T3 und T4).

Die Statusabfragemeldungen könnten beispielsweise so genannte Lebenszyklusmeldungen sein. Diese Lebenszyklusmeldungen werden in der Regel periodisch vom zweiten Kommunikationsendgerät KEG2 versendet und sollten daher auch periodisch, d.h. in einem vorbekannten Zeitraster beim ersten Kommunikationsendgerät KEG1 eintreffen. Das Eintreffen der Lebenszyklusmeldungen signalisiert dem ersten Kommunikationsendgerät KEG1, dass das zweite Kommunikationsendgerät KEG2 noch am Kommunikationsnetzwerk KN angeschlossen und zur Datenkommunikation mit dem ersten Kommunikationsendgerät KEG1 bereit ist.

Eine andere Statusabfragemeldung ist die so genannte Kommunikationsteilnehmerüberprüfungsrückmeldung, in der englischsprachigen Literatur auch als Polling bekannt. Dabei wird vom ersten Kommunikationsendgerät KEG1 zyklisch der Status des zweiten Kommunikationsendgerätes KEG2 und auch der Status weiterer Kommunikationsteilnehmer KEGn abgefragt. Das heißt, es werden die jeweiligen Busadressen abgefragt. Das zweite Kommunikationsendgerät KEG2 und auch die weiteren Kommunikationsteilnehmer KEGn müssen diese Statusabfragemeldung innerhalb einer festgelegten Zeit beantworten. Erhält das erste Kommunikationsendgerät KEG1 vom zweiten Kommunikationsendgerät KEG2 keine Rückmeldung ist das zweite Kommunikationsendgerät KEG2 vom Kommunikationsnetzwerk KN getrennt und kann keine Kommunikationsverbindung mit dem ersten Kommunikationsendgerät KEG1 aufrechterhalten. Auch dient diese Statusabfragemeldung zur Erkennung neuer Kommunikationsnetzwerkteilnehmer.

Häufig werden die Statusabfragemeldungen selbst vom ersten Kommunikationsendgerät KEG1 erzeugt, an das zweite Kommunikationsendgerät KEG2 versendet und dann vom zweiten Kommunikationsendgerät KEG2 gespiegelt und an das erste Kommunikationsendgerät KEG1 zurückgesendet. Auch bei diesem Verfahren der Spiegelung stammt die Statusabfragemeldung vom zweiten Kommunikationsendgerät KEG2, wenn auch nicht originär, so dass die Erfindung auch diese Spiegelung von Statusabfragemeldungen mit einschließt.

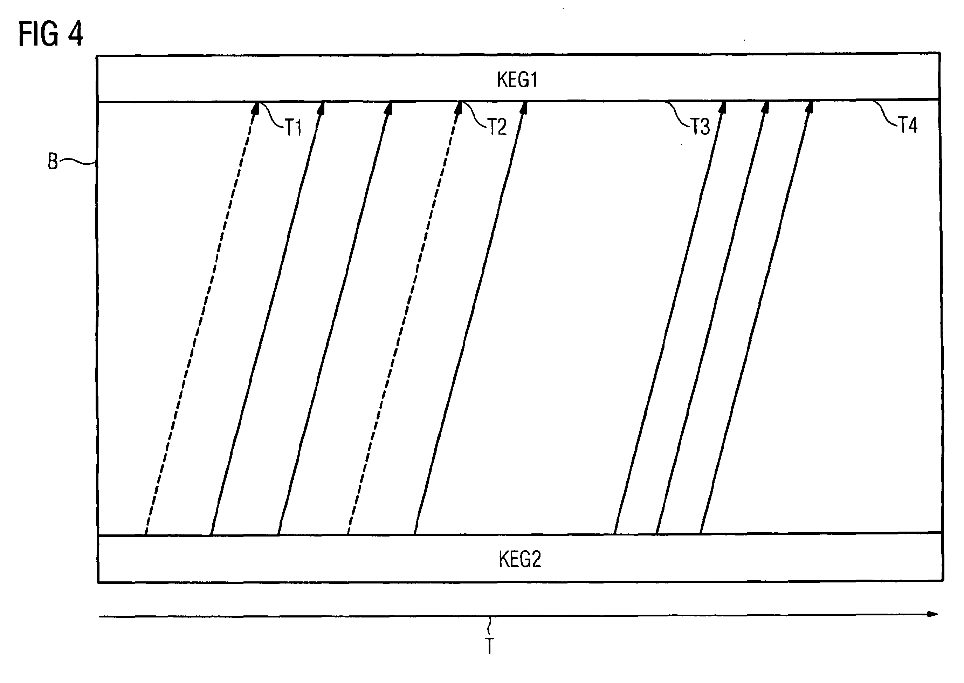

Das Ausbleiben des rechtzeitigen Empfangs der Statusabfragemeldung oder der Statusabfragemeldungen durch das erste Kommunikationsendgerät KEG1 kann aber zum Zwecke der Erkennung eines Dienstverhinderungsangriffs auf das erste Kommunikationsendgerät KEG1 durch das erste Kommunikationsendgerät KEG1 genutzt werden, was in der Figur 4 erläutert wird, die Figur 3 weiterbildet, so dass alle Bezeichnungen denen aus Figur 3 entsprechen.

Zwischen den Zeitpunkten T1 und T3 empfängt das erste Kommunikationsendgerät KEG1 weitere Meldungen (als durchgezogene Pfeile dargestellt) vom zweiten Kommunikationsendgerät KEG2, wobei zwei weitere Meldungen zwischen den Zeitpunkten T1 und T2 beim ersten Kommunikationsendgerät KEG1 eintreffen und eine weitere Meldung zwischen den Zeitpunkten T2 und T3. Die weiteren Meldungen unterliegen keinem Zyklus beziehungsweise keiner Periodizität. Eine dritte und eine vierte Statusabfragemeldung des zweiten Kommunikationsendgerätes KEG2 sollte im ersten Kommunikationsendgerät KEG1 zu den Zeitpunkten T3 bzw. T4 eintreffen, was jedoch nicht geschieht (dargestellt durch nicht gezeichnete gestrichelte Pfeile, die in T3 bzw. T4 münden).

Wenn das erste Kommunikationsendgerät KEG1 nach dem Ausbleiben des rechtzeitigen Empfangs der Statusabfragemeldung des zweiten Kommunikationsendgerätes KEG2 dennoch mindestens eine weitere Meldung empfängt, deren Meldungsinhalt als Absender das zweite Kommunikationsendgerät KEG2 angibt, interpretiert das erste Kommunikationsendgerät KEG1 diesen Zustand, d.h. den Empfang dieser weiteren Meldung, als einen Dienstverhinderungsangriff auf das erste Kommunikationsendgerät KEG1 und führt danach eine vorbestimmte Aktion aus. Das geschieht in der Figur 4 zwischen den Zeitpunkten T3 und T4. In diesem Zeitraum werden drei weitere Meldungen (dargestellt als durchgezogene Pfeile) im ersten Kommunikationsendgerät KEG1 empfangen, deren jeweiliger Meldungsinhalt als Absender das zweite Kommunikationsendgerät KEG2 angibt. Die Interpretation als Dienstverhinderungsangriff durch das erste Kommunikationsendgerät KEG1 wird angenommen, denn entweder ist das zweite Kommunikationsendgerät KEG2 nicht mehr in der Lage mit dem ersten Kommunikationsendgerät KEG1 zu kommunizieren, dann dürfte das erste Kommunikationsendgerät KEG1 weder Statusabfragemeldungen noch weitere Meldungen vom zweiten Kommunikationsendgerät KEG2 empfangen (hier ist die Kommunikationsverbindung zwischen erstem und zweitem Kommunikationsendgerät KEG1, KEG2 getrennt), oder das zweite Kommunikationsendgerät KEG2 ist nach wie vor zur Kommunikation mit dem ersten Kommunikationsendgerät KEG1 in der Lage, dann müsste das erste Kommunikationsendgerät KEG1 sowohl Statusabfragemeldungen als auch weitere Meldungen vom zweiten Kommunikationsendgerät KEG2 empfangen.

Der Fachmann wird dieses Verfahren in Bezug auf seine Fehleranfälligkeit optimieren, und dabei festlegen a) wie viele ausgebliebene Statusabfragemeldungen notwendig sind und / oder b) wie viele weitere Meldungen eintreffen müssen, um von einem Dienstverhinderungsangriff auszugehen. Wenn eine vorbestimmte Statusabfragemeldung des zweiten Kommunikationsendgerätes KEG2 nicht innerhalb der festgelegten Zeit empfangen wird, gibt der Zeitgeber ZG ein Unterbrechungssignal (Interrupt) aus, welches von der Steuerungs- und Verarbeitungseinheit SVE des ersten Kommunikationsendgerätes KEG1 für die auszuführende Aktion weiter verwendet wird. Im Regelfall wird das erste Kommunikationsendgerät KEG1 bei einem Dienstverhinderungsangriff mit einer Vielzahl von weiteren Meldungen überhäuft, so dass diese nicht in der vorgesehenen Zeit verarbeitet werden können, und in dem Speicher SP zwischengespeichert werden müssen. Aber die Zwischenspeicherung ist auch nur eine sehr kurzfristige Lösung, da der Speicher infolge der Vielzahl von eintreffenden weiteren Meldungen sehr schnell überläuft und das erste Kommunikationsendgerät KEG1 lahm legt.

Der Fachmann wird das Verfahren so optimieren, dass nach Möglichkeit die "künstlich erzeugten weiteren Meldungen" = Dienstverhinderungsangriff von den "ordnungsgemäß erzeugten weiteren Meldungen unterschieden werden können, wobei die "künstlich erzeugten weiteren Meldungen" aus dem Speicher SP entfernt werden. Die Steuerungs- und Verarbeitungseinheit SVE entscheidet darüber, ob weitere Meldungen in den Speicher SP gelangen, wobei weitere Meldungen, die einen falschen Meldungsaufbau besitzen oder bei denen die Prüfsumme (Cyclic Redundancy Check, CRC) nicht stimmt, ohnehin nicht dem Speicher SP zugeführt werden. Die Überprüfung und Einspeicherung von weiteren Meldungen wird in der Regel von der Datensicherungsschicht (Schicht 2) des OSI-Schichtenmodells durchgeführt.

Technisch einfach zu realisieren, ist hier die Entfernung aller weiteren Meldungen aus dem Speicher SP, d.h. der Speicher SP wird komplett gelöscht. Allerdings werden dabei auch ordnungsgemäß erzeugte weitere Meldungen mit verworfen, was in der Regel nicht stört, da im nächsten Datenaustausch die entsprechenden Informationen erneut empfangen werden können.

Technisch ebenfalls möglich ist die Trennung aufgrund des Dateninhalts der Datenpakete. Auch können zeitliche Relationen der Einspeicherung der weiteren Meldungen in Bezug zum Ausbleiben des Empfangs der Statusabfragemeldung für die Selektion und Verwerfung von "künstlich erzeugten weiteren Meldungen" im Gegensatz zu den "ordnungsgemäß erzeugten weiteren Meldungen" herangezogen werden.

Auch wenn bereits "ordnungsgemäß erzeugte weitere Meldungen" aus dem Speicher SP gelöscht wurden, können diese Meldungen später noch von höheren Applikationsschichten der Steuerungs- und Verarbeitungseinheit SVE des ersten Kommunikationsendgerätes KEG1 nach Überwindung des Dienstverhinderungsangriffs wiederhergestellt werden. Dabei macht man sich die Tatsache zu nutze, dass die einzelnen weiteren Meldungen (Datenpakete) fortlaufend nummeriert sind, und das erste Kommunikationsendgerät KEG1 die fehlenden Datenpakete dann erneut vom zweiten Kommunikationsendgerät KEG2 anfordern kann.

Der Speicher SP wird solange komplett gelöscht bzw. die "künstlich erzeugten weiteren Meldungen" aus dem Speicher SP entfernt, bis wieder eine Statusabfragemeldung des zweiten Kommunikationsendgerät KEG2 rechtzeitig durch das erste Kommunikationsendgerät KEG1 empfangen wird.

Während des Dienstverhinderungsangriffs kann das erste Kommunikationsendgerät KEG1 auch in einen sicheren Betriebsmodus übergehen, um weitere Schädigungen des ersten Kommunikationsendgerätes KEG1 zu vermeiden.

Stellt das erste Kommunikationsendgerät KEG1 einen Dienstverhinderungsangriff auf das erste Kommunikationsendgerät KEG1 fest, wird es an die anderen Kommunikationsteilnehmer KEG2, KEGn und an eine Kommunikationsnetzwerksüberwachungseinrichtung (hier nicht gezeigt) eine Warnmeldung über den Dienstverhinderungsangriff ausgeben. Die anderen Kommunikationsteilnehmer (KEG2, KEGn) können während des Dienstverhinderungsangriffs ebenfalls in einen sicheren Betriebsmodus übergehen und die Kommunikationsnetzwerksüberwachungseinrichtung wird die Suche nach dem Angreifer im Kommunikationsnetzwerk KN beginnen und im Fall seiner Feststellung können geeignete Gegenmaßnahmen wie z.B. die Trennung des Angreifers vom Kommunikationsnetzwerk KN vollzogen werden.

Mit umfasst von der Erfindung ist auch die Verwendung von Statusabfragemeldungen als weitere Meldungen zum Zwecke des Dienstverhinderungsangriffs. Auch hier würde das erste Kommunikationsendgerät KEG1 erkennen, dass diese nicht rechtzeitig eintreffen (zu früh oder zu spät) und wenn diese Ereignisse eine vorbestimmte Zahl überschreiten, wird dieses vom ersten Kommunikationsendgerät KEG1 als Dienstverhinderungsangriff interpretiert und die oben beschriebenen Aktionen ausgelöst.

Die Erfindung ist nicht auf das spezielle Ausführungsbeispiel beschränkt, sondern schließt weitere nicht explizit offenbarte Abwandlungen mit ein, solange von dem Kern der Erfindung Gebrauch gemacht wird.

## Patentansprüche

1. Verfahren zum Erkennen eines Dienstverhinderungsangriffs auf ein erstes Kommunikationsendgerät (KEG1) durch das erste Kommunikationsendgerät (KEG1), wobei
a) das erste und mindestens ein zweites Kommunikationsendgerät (KEG1, KEG2, KEGn) Kommunikationsteilnehmer in einem Kommunikationsnetzwerk (KN) sind, und zwischen dem ersten und dem zweiten Kommunikationsendgerät (KEG1, KEG2) eine Kommunikationsverbindung aufgebaut ist,
b) wobei das erste Kommunikationsendgerät (KEG1) zu einer festgelegten Zeit eine Statusabfragemeldung des zweiten Kommunikationsendgerätes (KEG2) empfangen soll,
c) wobei der rechtzeitige Empfang der Statusabfragemeldung des zweiten Kommunikationsendgerätes (KEG2) mittels eines dem ersten Kommunikationsendgerät zugeordneten Zeitgebers (ZG) überwacht wird,
d) wobei das erste Kommunikationsendgerät (KEG1) nach dem Ausbleiben des rechtzeitigen Empfangs der Statusabfragemeldung des zweiten Kommunikationsendgerätes (KEG2), wenn es dennoch mindestens eine weitere Meldung empfängt, deren Meldungsinhalt als Absender das zweite Kommunikationsendgerät (KEG2) angibt, den Empfang dieser mindestens einen weiteren Meldung als ein Dienstverhinderungsangriff auf das erste Kommunikationsendgerät (KEG1) interpretiert und eine Aktion ausführt und
e) wobei die ausgeführte Aktion des ersten Kommunikationsendgerätes (KEG1) die Entfernung der in einem Speicher (SP) des ersten Kommunikationsendgerätes (KEG1) zwischengespeicherten mindestens eine weitere Meldung aus dem Speicher (SP) bewirkt.

2. Verfahren gemäß Patentanspruch 1,
**dadurch gekennzeichnet, dass** der Inhalt des Speichers (SP) komplett gelöscht wird.

3. Verfahren gemäß Patentanspruch 1,
**dadurch gekennzeichnet, dass** nur die mindestens eine weitere Meldung aus dem Speicher (SP) gelöscht wird, die innerhalb einer vorbestimmten Zeit in Bezug zum Ausbleiben des rechtzeitigen Empfangs der Statusabfragemeldung des zweiten Kommunikationsendgerätes (KEG2) in den Speicher (SP) eingespeichert wurde oder wird.

4. Verfahren gemäß einem der vorstehenden Patentansprüche,
**dadurch gekennzeichnet, dass** die ausgeführte Aktion des ersten Kommunikationsendgerätes (KEG1) die Ausgabe einer Warnmeldung, dass ein Dienstverhinderungsangriff auf das erste Kommunikationsendgerät (KEG1) vorliegt, an andere Kommunikationsteilnehmer (KEG2, KEGn) des Kommunikationsnetzwerks (KN) und / oder an eine Kommunikationsnetzwerksüberwachungseinrichtung ist.

5. Verfahren gemäß einem der vorstehenden Patentansprüche,
**dadurch gekennzeichnet, dass** das erste Kommunikationsendgerät (KEG1) zu festgelegten Zeiten wiederholt Statusabfragemeldungen des zweiten Kommunikationsendgerätes (KEG2) empfangen soll und wobei das erste Kommunikationsendgerät (KEG1) nach dem Ausbleiben des rechtzeitigen Empfangs einer vorbestimmten Zahl von Statusabfragemeldungen des zweiten Kommunikationsendgerätes (KEG2), wenn es dennoch mindestens eine weitere Meldung empfängt, deren Meldungsinhalt als Absender das zweite Kommunikationsendgerät (KEG2) angibt, den Empfang dieser mindestens einen weiteren Meldung als ein Dienstverhinderungsangriff auf das erste Kommunikationsendgerät (KEG1) interpretiert und eine Aktion ausführt.

6. Verfahren gemäß einem der vorstehenden Patentansprüche,
**dadurch gekennzeichnet, dass** das erste Kommunikationsendgerät (KEG1) erst nach einer vorbestimmten Zahl von empfangenen weiteren Meldungen, deren Meldungsinhalt als Absender das zweite Kommunikationsendgerät (KEG2) angibt, die Aktion ausführt.

7. Verfahren gemäß einem der vorstehenden Patentansprüche 5 und 6,
**dadurch gekennzeichnet, dass** die Statusabfragemeldungen zyklisch oder periodisch vom ersten Kommunikationsendgerät (KEG1) empfangen werden sollen.

8. Verfahren gemäß Patentanspruch 7,
**dadurch gekennzeichnet, dass** die Statusabfragemeldungen Lebenszyklusmeldungen oder Kommunikationsteilnehmerüberprüfungsrückmeldungen sind.

9. Verfahren gemäß einem der vorstehenden Patentansprüche,
**dadurch gekennzeichnet, dass** nur das erste und das zweite Kommunikationsendgerät (KEG1, KEG2) Kommunikationsteilnehmer in dem Kommunikationsnetzwerk (KN) sind.

10. Kommunikationsendgerät (KEG1, KEG2, KEGn), umfassend eine Schnittstelle zum Austauschen von Datenpaketen mit anderen Kommunikationsteilnehmern eines Kommunikationsnetzwerks (KN), eine Steuerungs- und Verarbeitungseinheit (SVE), einen Zeitgeber (ZG) und einen Speicher (SP),
wobei das Kommunikationsendgerät (KEG1, KEG2, KEGn) eingerichtet ist, um zu einer festgelegten Zeit eine Statusabfragemeldung eines anderen Kommunikationsteilnehmers zu empfangen,
wobei der Zeitgeber (ZG) eingerichtet ist, um den rechtzeitigen Empfang der Statusabfragemeldung zu überwachen,
wobei das Kommunikationsendgerät (KEG1, KEG2, KEGn) eingerichtet ist, um nach dem Ausbleiben des rechtzeitigen Empfangs der Statusabfragemeldung, wenn es dennoch mindestens eine weitere Meldung empfängt, deren Meldungsinhalt als Absender den anderen Kommunikationsteilnehmer angibt, den Empfang dieser mindestens einen weiteren Meldung als einen Dienstverhinderungsangriff auf sich zu interpretieren, und
wobei die Steuerungs- und Verarbeitungseinheit (SVE) eingerichtet ist, um die mindestens eine weitere Meldung, welche in dem Speicher (SP) zwischengespeicher ist, aus dem Speicher (SP) zu entfernen.

## Claims

1. Method for detecting a Denial of Service attack on a first communication terminal (KEG1) by the first communication terminal (KEG1), wherein:
a) the first and the at least one second communication terminal (KEG1, KEG2, KEGn) are communication subscribers in a communication network (CN) and a communication connection is set up between the first and second communication terminals (KEG1, KEG2);
b) wherein the first communication terminal (KEG1) awaits receipt of a status enquiry message from the second communication terminal (KEG2) at a specified time;
c) wherein the timely receipt of the status enquiry message from the second communication terminal (KEG2) is monitored by a timer (ZG) assigned to the first communication terminal;
d) wherein, when the first communication terminal (KEG1) does not receive the status enquiry message from the second communication terminal (KEG2) in a timely manner, provided the first communication terminal (KEG1) still receives at least one further message, the message content of which indicates that the second communication terminal (KEG2) is the sender, the first communication terminal (KEG1) interprets the receipt of this at least one further message as a Denial of Service attack on the first communication terminal (KEG1) and takes action, and
e) wherein the action taken by the first communication terminal (KEG1) causes the removal from the storage unit (SP) of the at least one further message buffered in a storage unit (SP) of the first communication terminal (KEG1).

2. Method according to claim 1,
**characterised in that** the content of the storage unit (SP) is completely deleted.

3. Method according to claim 1,
**characterised in that** only the at least one further message which was previously or is currently stored in the storage unit (SP) within a predetermined time in relation to the absence of timely receipt of the status enquiry message from the second communication terminal (KEG2) is deleted from the storage unit (SP).

4. Method according to one of the preceding claims,
**characterised in that** the action taken by the first communication terminal (KEG1) is to output to other communication subscribers (KEG2, KEGn) in the communication network (KN) and/or to a communication network monitoring facility a warning message indicating that a Denial of Service attack is present at the first communication terminal (KEG1).

5. Method according to one of the preceding claims,
**characterised in that** the first communication terminal (KEG1) repeatedly awaits receipt of status enquiry messages from the second communication terminal (KEG2) at the specified time, and wherein if the first communication terminal (KEG1) does not receive a predetermined number of status enquiry messages from the second communication terminal (KEG2) in a timely manner, provided the first communication terminal (KEG1) still receives at least one further message, the message content of which indicates that the second communication terminal (KEG2) is a sender of the at least one further message, the first communication terminal (KEG1) interprets receipt of this at least one further message as a Denial of Service attack on the first communication terminal (KEG1) and takes action.

6. Method according to one of the preceding claims,
**characterised in that** the first communication terminal (KEG1) only takes action after a predetermined number of further messages have been received, the message content of which indicates that the second communication terminal (KEG2) is the sender of the further messages.

7. Method according to one of the preceding claims 5 and 6,
**characterised in that** the status enquiry messages are received cyclically or periodically by the first communication terminal (KEG1).

8. Method according to claim 7, **characterised in that** the status enquiry messages are life cycle messages or communication subscriber verification return messages.

9. Method according to one of the preceding claims,
**characterised in that** the first and second communication terminal (KEG1, KEG2) are communication subscribers in the communication network (CN).

10. Communication terminal (KEG1, KEG2, KEGn), comprising an interface for exchanging data packets with other communication subscribers in a communication network (CN), a control and processing unit (SVE), a timer (ZG) and a storage unit (SP),
wherein the communication terminal (KEG1, KEG2, KEGn) is configured to receive a status enquiry message from another communication subscriber at a specified time,
wherein the timer (ZG) is configured to monitor timely receipt of the status enquiry message;
wherein the communication terminal (KEG1, KEG2, KEGn) is configured such that when the communication terminal does not receive the status enquiry message in a timely manner, provided the communication terminal still receives at least one further message, the message content of which indicates that the other communication subscriber is the sender of the at least one further message, the communication terminal interprets receipt of this at least one further message as a Denial of Service attack on itself; and
wherein the control and processing unit (SVE) is configured to remove from the storage unit (SP) the at least one further message which is buffered in the storage unit (SP).

## Revendications

1. Procédé de détection d'une attaque de déni de service sur un premier terminal ( KEG1 ) de communication par le premier terminal ( KEG1 ) de communication, dans lequel
a) le premier et au moins un deuxième terminal ( KEG1, KEG2, KEGn ) de communication sont des participants à la communication dans un réseau ( KN ) de communication, et on établit une liaison de communication entre le premier et le deuxième terminal ( KEG1, KEG2 ) de communication,
b) dans lequel le premier terminal ( KEG1 ) de communication doit à un instant fixé, recevoir un message d'interrogation de statut du deuxième terminal ( KEG2 ) de communication,
c) on contrôle la réception à temps du message d'interrogation du statut du deuxième terminal ( KEG2 ) de communication au moyen d'une horloge ( ZG ) affectée au premier terminal de communication,
d) le premier terminal ( KEG1 ), après que ne se produit pas la réception à temps du message d'interrogation du statut du deuxième terminal ( KEG2 ) de communication, alors pourtant qu'au moins un autre message est reçu, message dont le contenu indique comme émetteur le deuxième terminal ( KEG2 ) de communication, interprète la réception de ce au moins un autre message comme une atteinte de déni de service pour le premier terminal ( KEG1 ) de communication et exécute une action et
e) l'action exécutée du premier terminal ( KEG1 ) provoque l'élimination de la mémoire ( SP ) du au moins un autre message mémorisé intermédiairement dans une mémoire (SP) du premier terminal ( KEG1 ) de communication.

2. Procédé suivant la revendication 1,
**caractérisé en ce que**
l'on efface complètement le contenu de la mémoire ( SP ).

3. Procédé suivant la revendication 1,
**caractérisé en ce que**
l'on n'efface que le au moins un autre message de la mémoire ( SP ), qui a été mémorisé ou est mémorisé dans la mémoire ( SP ) dans un temps prescrit à l'avance rapporté à l'absence de production de la réception à temps du message d'interrogation de statut du deuxième terminal ( KEG2 ) de communication.

4. Procédé suivant l'une des revendications précédentes,
**caractérisé en ce que**
l'action exécutée du premier terminal ( KEG1 ) de communication est l'émission d'un message d'avertissement suivant lequel il y a une attaque de déni de service sur le premier terminal ( KEG1 ), sur d'autres participants ( KEG2, KEGn ) à la communication ou sur un dispositif de contrôle du réseau de communication.

5. Procédé suivant l'une des revendications précédentes,
**caractérisé en ce que**
le premier terminal ( KEG1 ) de communication doit, à des instants fixés, recevoir de manière répétée des messages d'interrogation de statut du deuxième terminal ( KEG2 ) de communication et dans lequel le premier terminal ( KEG1 ) de communication, après qu'il n'a pas reçu à temps un nombre prescrit de messages d'interrogation du statut du deuxième terminal ( KEG2 ) de communication, alors pourtant qu'il a reçu au moins un autre message, message dont le contenu indique comme émetteur le deuxième terminal ( KEG2 ) de communication, interprète la réception de ce au moins un autre message comme une attaque de déni de service sur le premier terminal ( KEG1 ) de communication et exécute une action.

6. Procédé suivant l'une des revendications précédentes,
**caractérisé en ce que**
le premier terminal ( KEG1 ) de communication exécute l'action, seulement après un nombre déterminé à l'avance d'autres messages reçus dont le contenu indique comme émetteur le deuxième terminal ( KEG2 ) de communication.

7. Procédé suivant l'une des revendications précédentes 5 et 6,
**caractérisé en ce que**
les messages d'interrogation de statut doivent être reçus de manière cyclique ou périodique par le premier terminal ( KEG1 ) de communication.

8. Procédé suivant la revendication 7,
**caractérisé en ce que**
les messages d'interrogation de statut sont des messages de cycles de vie ou des messages en retour de contrôle de participants à la communication.

9. Procédé suivant l'une des revendications précédentes,
**caractérisé en ce que**
le premier et le deuxième terminal ( KEG1, KEG2 ) de communication sont des participants à la communication dans le réseau ( KN ) de communication.

10. Terminal ( KEG1, KEG2, KEGn ) de communication comprenant une interface, pour l'échange de paquets de données avec d'autres participants à la communication d'un réseau ( KN ) de communication, une unité ( SVE ) de commande et de traitement, une horloge ( ZG ) et une mémoire ( SP ),
dans lequel le terminal ( KEG1, KEG2, KEGn ) de communication est conçu pour recevoir, à un instant fixé, un message d'interrogation de statut d'un autre participant à la communication,
dans lequel l'horloge ( ZG ) est conçue pour contrôler la réception à temps du message d'interrogation de statut,
dans lequel le terminal ( KEG1, KEG2, KEGn ) de communication est conçu pour, après qu'il n'a pas reçu à temps le message d'interrogation de statut, alors pourtant qu'il a reçu au moins un autre message, message dont le contenu indique comme émetteur l'autre participant à la communication, interprète la réception de ce au moins un autre message comme une attaque de déni de service, et
dans lequel l'unité ( SVE ) de commande et de traitement est conçue pour éliminer de la mémoire ( SP ) le au moins un autre message qui est mémorisé intermédiairement dans la mémoire ( SP ).
